Europäisches Patentamt

(19) **European Patent Office**

**Office européen des brevets**

(11) Veröffentlichungsnummer: **0 191 141**
**B1**

(12) EUROPÄISCHE PATENTSCHRIFT

(45) Veröffentlichungstag der Patentschrifft:
21.03.90

(21) Anmeldenummer: 85113813.1

(22) Anmeldetag: 30.10.85

(51) Int. Cl.⁵: **B 01 D  53/34,** F 23 J  15/00,
F 23 C  9/08

(54) Verfahren und Anlage zur Reduzierung des NOx-Gehaltes von mittels fossiler Brennstoffe beheizten Grossfeuerungsanlagen.

(30) Priorität: 16.01.85 DE 3501189

(43) Veröffentlichungstag der Anmeldung:
20.08.86 Patentblatt 86/34

(45) Bekanntmachung des Hinweises auf die Patenterteilung:
21.03.90 Patentblatt 90/12

(84) Bennante Vertragsstaaten:
AT BE CH DE FR GB IT LI LU NL SE

(56) Entgegenhaltungen:
EP-A-0 047 346
DE-A-1 551 687
DE-A-2 510 365

PATENT ABSTRACTS OF JAPAN, Band 1, Nr. 1 (M-76), 1. März 177, Seite 58 M 76; & JP - A - 51 111 927 (KAWASAKI JUKOGYO K.K.) 02.02.1976

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Vier, Fritz**
**Knipprather Strasse 62**
**D-4019 Monheim (DE)**
Erfinder: **Schulenburg, Michael, Dr.**
**Lilienweg 32**
**D-4020 Mettmann 2/Metzkaisen (DE)**
Erfinder: **Wiese, Dietrich**
**Schürenbruch 15**
**D-4955 Hille 5 (DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1 (DE)**

LIBERGRAF, STOCKHOLM 1990

## Beschreibung

Die Erfindung richtet sich auf ein Verfahren und eine Anlage zur Reduzierung des $NO_x$-Gehaltes im Rauchgas bei der Verfeuerung fossiler Brennstoffe in Feuerungsanlagen, insbesondere in Großfeuerungsanlagen von Dampfkesseln, bei dem ein Teil der Rauchgase im Bereich der Brenner in den Feuerraum zurückgeführt wird.

Der übermäßige $NO_x$-Gehalt im Rauchgas stellt ein akutes Umweltproblem dar, so daß versucht wird, diesen Gehalt zu reduzieren. In der Bundesrepublik Deutschland fordert die sogenannte Großfeuerungsanlagen-Verordnung die Reduzierung auf Grenzwerte in der Größenordnung von 200 mg/Nm$^3$ bei Einsatz von Kohle als Brennstoff und bei Gas einen Wert von 100 mg/Nm$^3$.

Die Reduzierung des $NO_x$-Gehaltes kann grundsätzlich durch direkte Maßnahmen am Brenner oder dessen Randbedingungen erfolgen oder durch Behandlung der Rauchgase, beispielsweise durch eine katalytische Rauchgasbehandlung.

Es ist bekannt, durch feuerungstechnische Maßnahmen, d. h. durch sogenannte Low-$NO_x$-Brenner $NO_x$-Werte von etwa 350 mg/Nm$^3$ zu erreichen, wobei bis zu 30 % der entstehenden Rauchgase in den Feuerraum zurückgeführt werden. Diese bekannte Technologie erkauft sich die Senkung des $NO_x$-Gehaltes durch eine erhebliche Verschlechterung des Wirkungsgrades aufgrund eines deutlich erhöhten energetischen Aufwandes. Dies insbesondere deswegen, weil größere Rauchgas-Mengen durch den Kessel strömen, so daß es zu erhöhten Druckverlusten kommt und damit ein beträchtlicher Strommehrverbrauch für die Gebläse erforderlich wird. Es hat sich auch gezeigt, daß der Effekt, der mit der Flammenkühlung durch die Rückführung von bis zu 30 % des Rauchgases erzielt wird, nicht immer ausreicht, die gewünschte $NO_x$-Minderung zu erreichen, ganz unabhängig von den oben beschriebenen Nachteilen und den bautechnischen Schwierigkeiten.

Aufgabe der Erfindung ist die Schaffung einer Lösung, mit der der energetische Aufwand vermindert wird unter gleichzeitiger Erreichung einer noch höheren $NO_x$-Minderung im Rauchgas.

Beim Verfahren der eingangs bezeichneten Art wird diese Aufgabe gemäß der Erfindung dadurch gelöst, daß dem rückgeführten Rauchgasstrom vor Eintritt in den Kessel kalte Frischluft zugemischt wird.

Durch die Erfindung wird bei kleineren Volumenströmen ein sehr viel besserer Effekt erzielt, ohne daß damit eine Verschiebung des Temperaturprofiles derart verbunden wäre, daß etwa Umbauten bei vorhandenen Kesseln an den Heizflächen notwendig wären, wie dies bei den bekannten Verfahren der Fall ist. Die Zumischung kalter Frischluft zum rückgeführten Rauchgasstrom ermöglicht es, vergleichsweise geringe Mengen einzusetzen.

In Ausgestaltung sieht daher die Erfindung auch vor, daß zwischen 10 und 20 % der Rauchgase rückgeführt werden und dem rückgeführten Rauchgasstrom bis zur doppelten Menge an kalter Frischluft zugemischt wird.

In weiterer Ausgestaltung sieht die Erfindung vor, daß der Rauchgasstrom zwischen Kesselausgang und Luftvorwärmer und/oder hinter dem Luftvorwärmer entnommen und über ein Gebläse mindestens einer Mischkammer zugeführt wird. Diese Ausgestaltung ermöglicht insbesondere eine Nachrüstung bereits vorhandener Anlagen, um das erfindungsgemäße Verfahren einsetzen zu können, mit einem vergleichsweise geringfügigen Aufwand, da in der Regel zwischen Kesselausgang einerseits und Eingang in den Luftvorwärmer und/oder hinter dem Luftvorwärmer andererseits ausreichend Platz zur Verfügung steht, um Teil-Rauchgasmengen entnehmen zu können.

Um mit geringen Umbaumaßnahmen geeignete Gasgemische bereitstellen zu können, die im Bereich der Brenner bei der Verfeuerung fossiler Brennstoffe zu einer Verminderung der $NO_x$-Bildung beitragen, ist es vorteilhaft, daß der rückgeführte Rauchgasstrom in Teil-Rauchgasströme geteilt wird, wobei einem Teil-Rauchgasstrom bis zur vierfachen Menge an kalter Frischluft zugemischt wird.

Weiterhin kann es zweckmäßig sein, einen Teilstrom des rückgeführten Rauchgases dem Strom der vorgewärmten Frischluft direkt zuzumischen, wie dies in weiterer Ausgestaltung die Erfindung ebenfalls vorsieht. Dies kann insbesondere dann nützlich sein, wenn eine Ausbrandverzögerung im Flammenkern erzielt werden soll.

Erfindungsgemäß kann das Gemisch aus rückgeführtem Rauchgas und kalter Frischluft den Brennern und/oder dem Kessel im Bereich der Brenner getrennt von der vorgewärmten Frischluft und/oder dem Gemisch aus einem Teilstrom rückgeführten Rauchgases und vorgewärmter Frischluft zugeführt werden. Dies vereinfacht die Umbaumaßnahmen an den Brennersystemen und somit die Möglichkeit der Nachrüstung bestehender Anlagen. Des weiteren wird dadurch eine verminderte $NO_x$-Bildung im Feuerraum im Bereich der Brenner bei der Verfeuerung fossiler Brennstoffe erreicht.

Vorteilhaft ist es hierbei, wenn das Gemisch aus rückgeführtem Rauchgas und kalter Frischluft dem Kessel im Bereich der Brenner über konzentrisch um die Brenner angeordnete Düsen oder einen konzentrischen Ringspalt zugeführt wird und das Gemisch aus rückgeführtem Rauchgas und vorgewärmter Frischluft den Brennern zugeführt wird, wie es die Erfindung in weiteren Ausgestaltungen vorsieht.

Zur Lösung der obigen Aufgabe sieht die Erfindung eine Anlage vor, die sich dadurch auszeichnet, daß eine Abzweigleitung für einen kalten Teil-Frischluftstrom, eine Abzweigleitung vor einem Luftvorwärmer und/oder eine Abzweigleitung hinter einem Luftvorwärmer zur Rückführung eines Teil-Rauchgasstromes und eine von rückgeführtem Rauchgas und dem Teil-Frischluftstrom beaufschlagte Mischkammer sowie eine Zuführungsleitung zur Beaufschlagung des Kessels im Bereich der Brenner und/oder der Brenner mit dem Gemisch aus Rauchgas und kalter Frischluft installiert wird.

In weiterer Ausgestaltung weist die Anlage eine Abzweigleitung für einen Teil-Rauchgasstrom mit einer Eindüsung in eine Frischluftleitung für vorgewärmte Verbrennungsluft zur Beaufschlagung der Brenner auf.

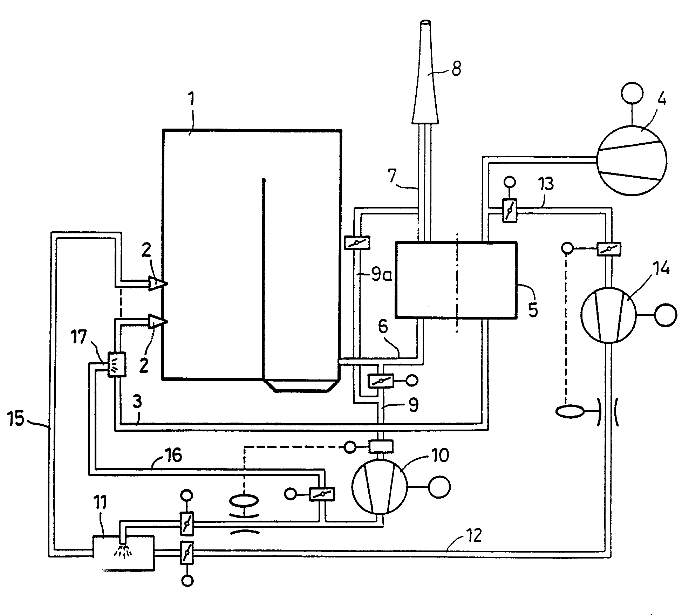

Die Erfindung ist nachstehend anhand der Zeichnung beispielsweise näher erläutert, wobei die einzige Figur ein Prinzipschaltbild einer Anlage zur Durchführung des Verfahrens zeigt.

Ein Kessel 1 ist mit einer Reihe von Brennern 2 ausgerüstet, die nur durch einen Pfeil dargestellt sind. Bei den Brennern soll es sich im dargestellten Beispiel um Gasbrenner handeln. Die Frischluft für die Brenner 2 wird über eine Leitung 3 von einem in der Abbildung oben rechts gezeichneten Gebläse 4 zugeführt. Diese Frischluft wird über einen Rauchgaswärmetauscher 5 als Luftvorwärmer erwärmt. Die Rauchgase werden nach Verlassen des Kessels über eine Leitung 6 ebenfalls dem Luftvorwärmer 5 zugeführt und verlassen diesen über eine weitere Leitung 7, um über einen Schornstein 8 abgeführt zu werden.

Wie sich aus der Figur ergibt, zweigt von der Rauchgasleitung 6 eine Abzweigleitung 9 vor dem Luftvorwärmer 5 und von der Leitung 7 eine Abzweigleitung 9a hinter dem Luftvorwärmer 5 für einen Teil der Rauchgase ab. Über ein Rauchgasgebläse 10 wird dieser Teilstrom einer Mischkammer 11 und einer Abzweigleitung 16 zugeführt. Der Mischkammer 11 zugeführte Teil-Rauchgasstrom wird dort mit kalter Frischluft vermischt, die über eine Leitung 12 der Mischkammer 11 zugeführt wird.

Die Frischluft wird in Strömungsrichtung vor dem Luftvorwärmer 5 über die Leitung 13 aus dem Frischluftvolumen entnommen und über ein weiteres Gebläse 14 dann in der Leitung 12 der Mischkammer 11 zugeführt.

Das Gemisch aus Rauchgas und kalter Frischluft verläßt die Mischkammer 11 und wird über eine Leitung 15 im Bereich der Brenner 2 in den Kessel I eingeblasen. Bei diesen als Pfeil dargestellten Einblasöffnungen soll es sich um mehrere, jeweils konzentrisch um jeden einzelnen Brenner 2 angeordnete rohrförmige Düsen oder einen konzentrisch um jeden einzelnen Brenner 2 angeordneten Ringspalt handeln, so daß das Gemisch aus Rauchgas und kalter Frischluft im Feuerraum des Kessels 1 getrennt von dem durch die Brenner 2 geführten Gasstrom gelangt.

Das der Abzweigleitung 16 zugeführte Rauchgas wird in die Frischluftzuleitung 3 eingebracht, und zwar mit einer in der Frischluftleitung vor den Brennern 2 angeordneten Eindüsung 17. Von der Eindüsung 17 gelangt das Gemisch aus Rauchgas und vorgewärmter Frischluft in die Brenner 2, wo es dann in hier nicht näher dargestellter Weise zu einer Vermischung mit dem den Brennern ebenfalls zugeführten Brennstoff kommt.

Die jeweiligen Regelorgane sind in der Figur nur angedeutet. Hierauf kommt es im Rahmen der vorliegenden Erfindung nicht an.

Was die einzelnen Mengen angeht, so seien hier nur einige Mengen angegeben: Bei einem Dampfkessel mit einer Feuerungswärmeleistung von 150 MW zur Erzeugung von 180 t Dampf pro Stunde kann das über das Gebläse 4 angesaugte Frischluftvolumen beispielsweise 155 000 $Nm^3$/h betragen, das die Kessel über die Leitung 6 verlassende Rauchgasvolumen beispielsweise 169 000 $Nm^3$/h.

Über die Leitungen 9 und/oder 9a wird dann beispielsweise über das Gebläse 10 ein Teil-Rauchgasstrom von 25 000 $Nm^3$/h gefördert, während über das Gebläse 14 ein Teilstrom der Frischluft von 40 000 $Nm^3$/h gefördert wird.

Der rückgeführte Teil-Rauchgasstrom teilt sich hinter dem Gebläse 10 z. B. in einen Teil-Rauchgasstrom vom 10 000 $Nm^3$/h, der der Mischkammer 11 zugeführt wird und einen Teil-Rauchgasstrom von 15 000 $Nm^3$/h, der über die Abzweigleitung 16 der Eindüsung 17 zugeführt wird.

Das Gemisch aus rückgeführtem Rauchgas-Teilstrom und kalter Frischluft wird über die Leitung 15 im Bereich der Brenner 2 derart in den Feuerraum eingeleitet, daß in den konzentrisch um die Brenner angeordneten Düsen oder den konzentrischen Ringspalten Strömungsgeschwindigkeiten von 80 bis 120 m/s. herrschen.

Das Gemisch aus rückgeführtem Rauchgas und vorgewärmter Frischluft wird den Brennern 2 derart zugeleitet, daß die Strömungsgeschwindigkeit in den Brennern 2 nach Zumischung des Brennstoffes 60 bis 80 m/s. beträgt.

## Patentansprüche

1. Verfahren zur Reduzierung des $NO_x$-Gehaltes im Rauchgas bei der Verfeuerung fossiler Brennstoffe in Feuerungsanlagen, insbesondere in Großfeuerungsanlagen von Dampfkesseln, bei dem ein Teil der Rauchgase im Bereich der Brenner in den Feuerraum zurückgeführt wird, *dadurch gekennzeichnet*, daß dem rückgeführten Rauchgasstrom vor Eintritt in den Kessel kalte Frischluft zugemischt wird.

2. Verfahren nach Anspruch 1, *dadurch gekennzeichnet*, daß zwischen 10 und 20 % der Rauchgase rückgeführt werden und dem rückgeführten Rauchgasstrom bis zur doppelten Menge an kalter Frischluft zugemischt wird.

3. Verfahren nach Anspruch 1 oder 2, *dadurch gekennzeichnet*, daß der Rauchgasstrom zwischen Kesselausgang und Luftvorwärmer und/oder hinter dem Luftvorwärmer entnommen und über ein Gebläse mindestens einer Mischkammer zugeführt wird.

4. Verfahren nach einem der vorangehenden Ansprüche, *dadurch gekennzeichnet*, daß der rückgeführte Rauchgasstrom in Teil-Rauchgasströme geteilt wird, wobei einem Teil-Rauchgasstrom bis zur vierfachen Menge an kalter Frischluft zugemischt wird.

5. Verfahren nach einem der vorangehenden Ansprüche, *dadurch gekennzeichnet*, daß ein Teilstrom des rückgeführten Rauchgases dem Strom der vorgewärmten Frischluft direkt zugemischt wird.

6. Verfahren nach einem der vorangehenden Ansprüche, *dadurch gekennzeichnet*, daß das Gemisch aus rückgeführtem Rauchgas und kalter Frischluft den Brennern und/oder dem Kessel im Bereich der Brenner getrennt von der vorgewärmten Frischluft und/oder dem Gemisch aus einem Teilstrom rückgeführten Rauchgases und vorgewärmter Frischluft zugeführt wird.

7. Verfahren nach Anspruch 6, *dadurch gekennzeichnet*, daß das Gemisch aus rückgeführtem Rauchgas und kalter Frischluft dem Kessel im Bereich der Brenner über konzentrisch um die Brenner angeordnete Düsen oder einen konzentrischen Ringspalt zugeführt wird.

8. Verfahren nach Anspruch 6 oder 7, *dadurch gekennzeichnet*, daß das Gemisch aus rückgeführtem Rauchgas und vorgewärmter Frischluft den Brennern zugeführt wird.

9. Anlage insbesondere zur Durchführung des Verfahrens nach einem der vorangehenden Ansprüche, *gekennzeichnet durch* eine Abzweigleitung (13) für einen kalten Teil-Frischluftstrom, eine Abzweigleitung (9) vor einem Luftvorwärmer (5) und/oder eine Abzweigleitung (9a) hinter einem Luftvorwärmer (5) zur Rückführung eines Teil-Rauchgasstromes und eine von rückgeführtem Rauchgas und dem Teil-Frischluftstrom beaufschlagte Mischkammer (11) sowie eine Zuführungsleitung (15) zur Beaufschlagung des Kessels (1) im Bereich der Brenner (2) und/oder der Brenner (2) mit dem Gemisch aus Rauchgas und kalter Frischluft.

10. Anlage nach Anspruch 9, *gekennzeichnet durch*, eine Abzweigleitung (16) für einen Teil-Rauchgasstrom mit einer Eindüsung (17) in eine Frischluftleitung (3) für vorgewärmte Verbrennungsluft zur Beaufschlagung der Brenner (2).

## Claims

1. A method reducing the NO$_x$ content of flue gas . in the burning of fossil fuels in firing plants, more especially in large firing plants of steam boilers, in which the flue gases are partially recycled to the fire box in the region of the burners, characterized in that cold fresh air is added to the recycled flue gas stream before entry into the boiler.

2. A method as claimed in claim 1, characterized in that between 10 and 20 % of the flue gases are recycled and up to twice the quantity of cold fresh air is added to the recycled flue gas stream.

3. A method as claimed in claim 1 or 2, characterized in that the flue gas stream is removed between the boiler exit and the air preheater and/or after the air preheater and is delivered to at least one mixing chamber *via* a blower.

4. A method as claimed in any of the preceding claims, characterized in that the recycled flue gas stream is divided into partial flue gas streams, up to four times the quantity of cold fresh air being added to one partial flue gas stream.

5. A method as claimed in any of the preceding claims, characterized in that a partial stream of the recycled flue gas is directly added to the stream of preheated fresh air.

6. A method as claimed in any of the preceding claims, characterized in that the mixture of recycled flue gas and cold fresh air is fed to the burners and/or the boiler in the region of the burners separately from the preheated fresh air and/or the mixture of a partial stream of recycled flue gas and preheated fresh air.

7. A method as claimed in claim 6, characterized in that the mixture of recycled flue gas and cold fresh air is fed to the boiler in the region of the burners through nozzles arranged concentrically around the burners or through a concentric annular gap.

8. A method as claimed in claim 6 or 7, characterized in that the mixture of recycled flue gas and preheated fresh air is fed to the burners.

9. A plant, more especially for carrying out the method claimed in any of the preceding claims, characterized by a branch pipe (13) for a partial stream of cold fresh air, a branch pipe (9) before an air preheater (5) and/or a branch pipe (9a) after an air preheater (5) for recycling a partial flue, a mixing chamber (11) fed with the recycled flue gas and the partial stream of fresh air and a feed pipe (15) for feeding the boiler (1) in the region of the burners (2) and/or the burners (2) with the mixture of flue gas and cold fresh air.

10. A plant as claimed in claim 9, characterized by a branch pipe (16) for a partial stream of flue gas with an injection opening (17) in a fresh air pipe (3) for feeding preheated combustion air to the burners (2).

## Revendications

1. Procédé pour réduire la teneur en NO$_x$ des fumées lors de la combustion de combustibles fossiles dans les foyers, notamment dans les grands foyers de chaudières à vapeur dans lesquels une partie des fumées est renvoyée dans la zone du brûleur à la chambre de combustion, caractérisé en ce que le courant de fumées renvoyé au brûleur est mélangé à de l'air pur froid avant l'entrée dans la chaudière.

2. Procédé selon la revendication 1, caractérisé en ce que 10 à 20 % des fumées sont renvoyés au brûleur et que le courant de fumées est mélangé à la quantité d'air pur froid pouvant en représenter le double.

3. Procédé selon la revendication 1 ou 2, caractérisé en ce que le courant de fumées est prélevé entre la sortie de la chaudière et le préchauffeur d'air et/ou après le préchauffeur et est conduit au moyen d'un ventilateur dans au moins une chambre de mélange.

4. Procédé selon l'une des revendications précédentes, caractérisé en ce que le courant de fumées est séparé en courants de fumées partiels, puis on mélange un courant de fumées partiel à une quantité d'air pur froid pouvant en représenter le quadruple.

5. Procédé selon l'une des revendications précédentes, caractérisé en ce que l'on mélange directement un courant partiel de fumées renvoyé au brûleur au courant d'air pur préchauffé.

6. Procédé selon les revendications précédentes, caractérisé en ce que le mélange de fumées et d'air pur froid est injecté aux brûleurs et/ou à la chaudière dans la zone du brûleur indépendamment de l'air pur réchauffé et/ou au mélange constitué d'un courant partiel de fumées et d'air pur préchauffé.

7. Procédé selon la revendication 6, caractérisé en ce que le mélange de fumées et d'air pur froid est introduit dans la chaudière dans la zone du brûleur par des buses disposées concentriquement autour des brûleurs ou par une fente annulaire concentrique.

8. Procédé selon la revendication 6 ou 7, caractérisé en ce que le mélange de fumées et d'air pur froid préchauffé est introduit dans les brûleurs.

9. Unité notamment pour réaliser le procédé selon l'une des revendications précédentes, caractérisée en ce que l'on installe une dérivation (13) pour un courant d'air pur partiel froid, une dérivation (9) avant un préchauffeur d'air (5) et/ou une dérivation (9a) derrière un préchauffeur d'air (5) pour renvoyer au brûleur un courant partiel de fumées et une chambre de mélange (11) alimentée par la fumée et le courant partiel d'air pur, ainsi qu'une conduite d'arrivée à la chaudière dans la zone des brûleurs (2) et/ou aux brûleurs (2), pour le mélange de fumées et d'air pur froid.

10. Unité selon la revendication 9, caractérisée en ce que l'unité présente une dérivation (16) pour un courant partiel de fumées avec injection (17) dans une conduite d'air frais (13) pour de l'air comburant préchauffé injecté dans le brûleur (2).